# EUROPÄISCHE PATENTSCHRIFT

(11) **EP 0 663 322 B1**
(45) Veröffentlichungstag und Bekanntmachung des Hinweises auf die Patenterteilung: **06.08.1997**
(21) Anmeldenummer: 94100479.8
(22) Anmeldetag: 14.01.1994
(51) Int. Cl.: B60Q 7/00

(54) **Zusammenlegbares Warndreieck**
Foldable signalisation triangle
Triangle de signalisation pliable

(43) Veröffentlichungstag der Anmeldung: 19.07.1995
(73) Patentinhaber: GEBRA GMBH & CO. GEBR. RADERSCHAD KG, 53773 Hennef (DE)
(72) Erfinder: Brettschneider, Klaus, D-53809 Ruppichteroth (DE); Kraus, Gerd, D-53783 Eitorf (DE); Lischke, Bernd, D-53639 Königswinter (DE); Lomberg, Sascha, D-53783 Eitorf (DE); Pimmer, Holger, D-53757 St. Augustin (DE); Walgenbach, Reinhold, D-53773 Hennef (DE); Raderschad, Manfred, D-53773 Hennef (DE)
(74) Vertreter: Fechner, Joachim, Dr.-Ing.

(56) Entgegenhaltungen:
- EP-A- 0 342 449
- DE-A- 2 006 275

## Beschreibung

Die Erfindung betrifft ein zusammenlegbares Warndreieck zur Mitführung in Kraftfahrzeugen mit den Merkmalen des Oberbegriffs des Anspruchs 1.

Aus EP-A 0 342 449 ist ein derartiges zusammenlegbares Warndreieck mit schwenkbaren Standbeinen bekannt, bei dem die Standbeine durch Torsionsfedern in Ausschwenkrichtung vorgespannt sind, so daß sie selbsttätig ausschwenken und dadurch die Aufstellung des Warndreiecks erleichtern. Die Fertigung dieses Warndreiecks mit federbestückten Standbeinen ist verhältnismäßig aufwendig. Darüber hinaus gibt es Anwendungsfälle, bei denen das selbsttätige Ausschwenken der Standbeine unerwünscht ist, z.B. wenn das Warndreieck zur Mitführung in einem Personenkraftwagen auf der Innenseite des Kofferraumdeckels lösbar angebracht ist.

Darüber hinaus ist ein zusammenlegbares Warndreieck der eingangs genannten Art in Benutzung, bei dem die Standbeine zur Aufstellung des Dreiecks von Hand ausgeschwenkt werden müsssen. Dabei kommen die Standbeine mit einer auf der Basisplatte abgestützten Blattfeder in Eingriff, welche die Schwenkbewegung der Standbeine hemmt, andererseits aber die Standbeine in der ganz eingeschwenkten und ganz ausgeschwenkten Position freigibt, so daß die Standbeine in diesen Positionen stabilisiert werden. Durch die Blattfeder und die besondere Ausbildung der Enden der Basisplatte sowie durch den hohen Montageaufwand ist für die Fertigung dieses Warndreiecks eine beträchtliche Arbeitszeit erforderlich, so daß dieses Warndreieck bei normalen Arbeitskosten relativ teuer ist.

Der vorliegenden Erfindung liegt die Aufgabe zugrunde, ein zusammenlegbares Warndreieck der eingangs genannten Art zu schaffen, dessen Standbeine von Hand ausgeschwenkt werden können und in den vollständig eingeschwenkten und vollständig ausgeschwenkten Lagen stabilisiert sind. Insbesondere soll dieses Warndreieck mit minimalen Kosten, insbesondere Montagekosten hergestellt werden könnnen. Darüber hinaus soll auch ein zusammenlegbares Warndreieck der eingangs genannten Art geschaffen werden, bei dem der auf das aufgestellte Dreieck wirkende Winddruck teilweise von den Standbeinhaltern abgefangen wird, so daß die Gefahr des Rutschens oder Kippens das Dreiecks auf der Fahrbahn verringert wird. Weitere Vorteile der Erfindung ergeben sich aus der nachfolgenden Beschreibung.

Diese Aufgabe wird bei dem eingangs genannten zusammenlegbaren Warndreieck erfindungsgemäß durch die im Kennzeichenteil von Anspruch 1 aufgeführten Merkmale gelöst. Anders als bei dem genannten in Benutzung befindlichen Warndreieck ist keine Stahlfeder erforderlich, um die Standbeine in ihren Extremlagen zu stabilisieren, sondern es sind an der Unterseite des Standbeinhalters Stege angeordnet, die mit dieser Unterseite einen Spalt bilden, den das Standbein beim Ausund Einschwenken passieren muß. Die Breite dieses Spaltes ist im Verhältnis zu der Dicke (bzw. dem Durchmesser bei Standbeinen in Form zylindrischer Stäbe) des Beins so bemessen, daß das Standbein bei der Schwenkbewegung zwischen den Extremlagen geklemmt wird, so daß der Benutzer zum Aus- und Einschwenken ein merkliches Drehmoment aufwenden muß. In den Extremlagen, d.h. in der vollständig eingeschwenkten oder für die Aufstellung des Dreiecks vollständig ausgeschwenkten Position ist die Klemmung des Standbeins verringert oder ganz aufgehoben, so daß das Standbein in diesen Lagen automatisch gehalten wird. Die Klemmung kann z.B. dadurch verringert werden, daß der genannte Klemmspalt an den betreffenden Stellen erweitert ist. Die Stabilisierung der völlig ausgeschwenkten und völlig eingeschwenkten Standbeinlage stellt sicher, daß bei dem auf der Fahrbahn aufgestellten Warndreieck durch Windstoßbelastung die Schwenklage der Standbeine nicht verändert und somit die Standfestigkeit des Dreiecks nicht verringert wird. Bei einem in dem Kofferraumdeckel innen angebrachten Warndreieck wird sichergestellt, daß die beiden freiliegenden Standbeine nicht durch die Schwerkraft oder durch Stoßbeanspruchung von selbst ausschwenken.

Bei der bevorzugten Ausführungsform der Erfindung sind die beiden Stege an einem an der Unterseite des Standbeinhalters außen nach unten gezogenen Fuß nach innen ragend angeformt. Bei der vorliegenden Erfindung wird als Außenseite des Standbeinhalters die von dem Warndreieck abgewandte Seite und als Innenseite des Standbeinhalters die dem Warndreieck zugewandte Seite bezeichnet, zu der die eingeschwenkten Standbeine gerichtet sind. Bei dieser Ausführungsform ist das Unterteil des Standbeinhalters geißfußartig ausgebildet, wie dies z.B. von Ventileinstellschlüsseln für PKWs her bekannt ist. Zweckmäßigerweise verlaufen die beiden Stege dabei mit Abstand parallel zueinander.

Vorzugsweise ist zwischen den beiden Stegen ein Zwischenraum gebildet und sind die in den Lagerbohrungen geführten abgewinkelten Enden der Standbeine bis zur Freigabe aus ihren Lagerbohrungen in den Zwischenraum hinein verschiebbar. Das Einsetzen der abgewinkelten Enden der Standbeine in ihre Bohrungen ist von dem genannten Zwischenraum aus leicht möglich, wodurch die Montage erleichtert wird. Zweckmäßigerweise sind die Lagerbohrungen zylindrisch und die Standbeine zylindrische Stahldrähte.

Vorzugsweise sind in dem Standbeinhalter außen- und innenseitig in der Mittelebene Befestigungsnuten ausgebildet und ist die Basisplatte nahe ihren beiden Enden mit je einer Ausnehmung versehen und mit ihren Ausnehmungsrändern in die Befestigungsnuten der Standbeinhalter eingesetzt. Die Montage der Standbeine an der Basisplatte bzw. dem Dreieck erfolgt somit sehr einfach: Die abgewinkelten Enden der Standbeine werden von unten, d.h. von dem Raum zwischen den beiden Stegen aus in ihre Lagerbohrungen eingesetzt, und dann wird die Basisplatte von oben auf den Standbeinhalter aufgedrückt, wobei die Platte mit den Rändern ihrer Ausnehmung(en) im Preßsitz mit den Befestigungsnuten in Eingriff kommt. Zweckmäßigerweise ist hierbei vorgesehen, daß die in die Befestigungsnuten eingesetzte Basisplatte in den Raum zwischen die Klemmspalte ragt und dadurch die Verschiebungsbewegungen der abgewinkelten Standbeinenden in ihren Lagerbohrungen begrenzt sind. Auf diese Weise wird verhindert, daß nach der Verbindung des Standbeinhalters mit der Basisplatte die Standbeine von dem Standbeinhalter wieder getrennt werden können.

Zweckmäßigerweise ist an der die vollständig ausgeschwenkte Standbeinlage bestimmenden Stelle des Klemmspalts eine Spalterweiterung ausgebildet. Das Standbein wird an dieser Stelle des Spalts von der Klemmung entlastet und dadurch diese Standbeinposition stabilisiert, da jede Verschwenkung aus dieser Position eine der Verschwenkung entgegenwirkende Klemmkraft zur Folge hat. Das vollständig eingeschwenkte Standbein befindet sich im allgemeinen wenigstens teilweise außerhalb des Klemmspalts und ist somit ebenfalls von der Klemmung entlastet, d.h. positionsstabilisiert.

Die Stege haben material- und/oder dimensionsbedingt ein geringes Federungsvermögen, so daß sie beim Einschwenken der Standbeine in die Klemmspalte etwas nachgeben und die Klemmung bewirken.

Nach der bevorzugten Ausführungsform der Erfindung sind auf dem Standbeinhalter Umfangsnuten ausgebildet. Diese Umfangsnuten begünstigen das Federungsvermögen des Standbeinhalters zwischen der die Windkraft aufnehmenden, im allgemeinen metallischen Basisplatte einerseits und den metallischen Standbeinen andererseits. Auf diese Weise werden die Winddruckkräfte zum Teil durch Verformung der Standbeinhalter aufgenommen; das Dreieck kommt in eine gewisse Schieflage und die Gefahr des Rutschens oder Kippens auf der Fahrbahn wird verringert.

Zweckmäßigerweise sind die Lagerbohrungen für die abgewinkelten Standbeinenden zur Mittelebene des Standbeinhalters unter einem Winkel β geneigt, der in dem Bereich von 3 bis 23°, vorzugsweise von 10 bis 16°, insbesondere bei 13° liegt. Durch diese Neigung senken sich die Aufsetzenden der Standbeine beim Ausschwenken unter das Niveau der Dreiecksunterkante, so daß das Warndreieck beim Aufstellen einen ausreichenden Abstand vom Boden hat.

Bei einer anderen Ausführungsform des erfindungsgemäßen Warndreiecks sind die beiden Stege an einem an der Unterseite des Standbeinhalters mittig nach unten gezogenen Fuß zu den beiden Seiten ragend angeformt. Der Klemmspalt kann sich hierbei über die Position der ganz ausgeschwenkten Standbeinlage hinaus nach außen erstrecken, wobei an der Außenseite zwischen den Stegen ein Zwischenraum ist, durch den die abgewinkelten Enden der Standbeine in die Lagerbohrungen eingesetzt werden können.

Die Erfindung wird nachfolgend an Hand der Zeichnung näher beschrieben. Es zeigen
Figur 1 die Ansicht eines aufgerichteten erfindungsgemäßen Warndreiecks mit eingeschwenkten Standbeinen;
Figur 2 die Seitenansicht einer Ausführungsform des Standbeinhalters an der Basisplatte in vergrößertem Maßstab;
Figur 3 die Außenansicht des in Figur 2 gezeigten Standbeinhalters;
Figur 4 einen Schnitt nach der Linie IV-IV der Figur 2;
Figur 5 die Draufsicht des in Figur 2 gezeigten Standbeinhalters;
Figur 6 die Innenansicht des in Figur 2 gezeigten Standbeinhalters;
Figur 7 die Unteransicht des in Figur 2 gezeigten Standbeinhalters;
Figur 8 einen Schnitt nach der Linie VIII-VIII der Figur 5;
Figur 9 eine der Figur 2 entsprechende Seitenansicht einer zweiten Ausführungsform des Standbeinhalters an einer Basisplatte; und
Figur 10 einen Schnitt nach der Linie IX-IX der Figur 9.

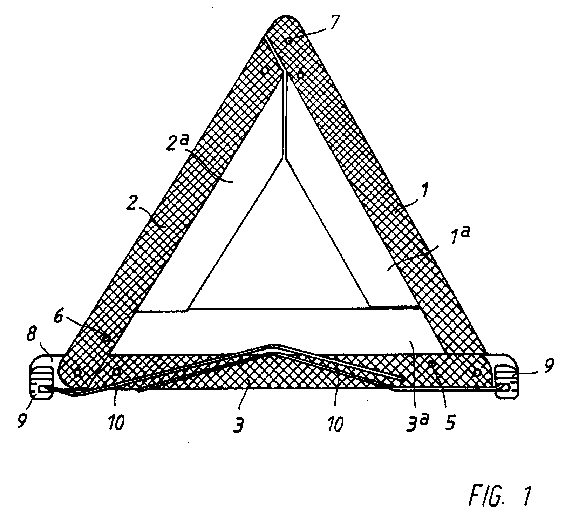

Die in Figur 1 gezeigte Ausführungsform des erfindungsgemäßen Warndreiecks hat drei rote, rückstrahlende Leisten 1,2,3, an die nach innen die Leisten 1^{a},2^{a},3^{a} mit roter fluoreszierender Oberfläche angeformt sind. Die Kunststoffleiste 3 ist an der Vorderseite einer aus Stahl bestehenden Basisplatte 8 befestigt. Die Leiste 1,1^{a} ist um das Gelenk 5 schwenkbar, die Leiste 2,2^{a} um das Gelenk 6. Wenn die Leisten 1,1^{a} und 2,2^{a} in die in Figur 1 dargestellte Lage unter Bildung eines Dreiecks hochgeschwenkt sind, können sie durch einen Druckknopf 7 verbunden werden.

An den beiden Enden der Basisplatte 8 sind aus Kunststoff bestehende Standbeinhalter 9 angebracht, wie im einzelnen weiter unten näher beschrieben ist. In jedem der beiden Standbeinhalter 9 sind zwei Standbeine ausschwenkbar gelagert, von denen in Figur 1 nur die beiden vor der Basisplatte 8 befindlichen Standbeine 10 in ihrer vollständig eingeschwenkten Lage dargestellt sind, die hinter der Basisplatte 8 angeordneten Standbeine jedoch ebenso ausgebildet sind wie die gezeigten Standbeine 10.

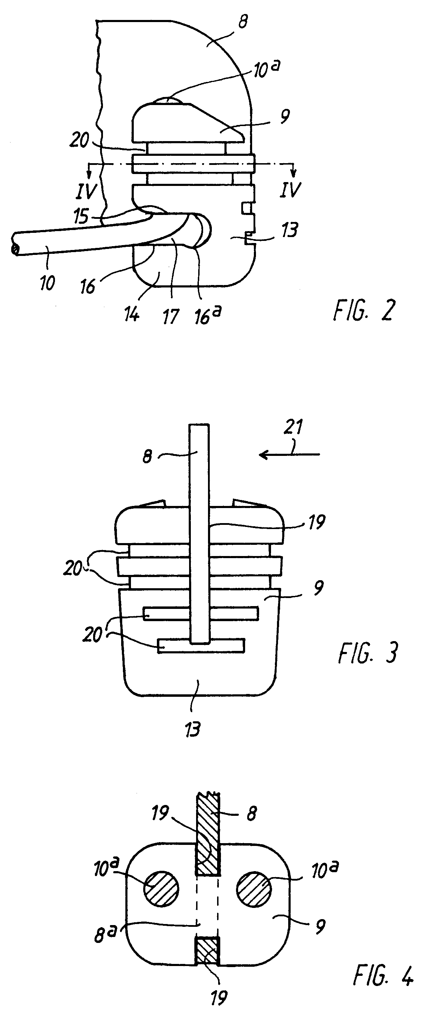

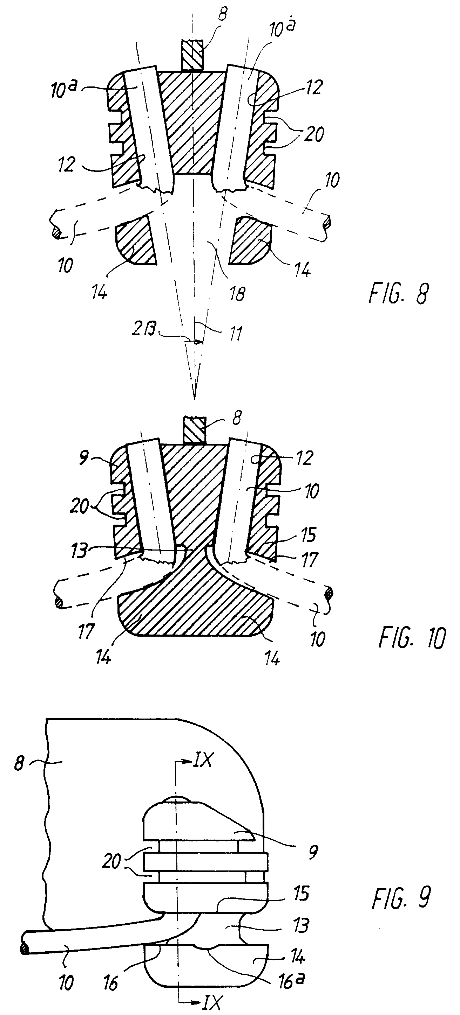

In den Figuren 2 bis 8 ist der an der Basisplatte 8 angebrachte Standbeinhalter 9 vergrößert und im einzelnen dargestellt. Aus diesen Figuren ist ersichtlich, daß der Standbeinhalter 9 ein zur Mittelebene 11 und damit zur Basisplatte 8 symmetrischer Kunststoffkörper ist. Der Standbeinhalter 9 hat symmetrisch zur Mittelebene 11 zwei zylindrische Bohrungen 12 unter einem Neigungswinkel β = 13° zu dieser Ebene (Figur 8). An dem Standbeinhalter 9 ist außen ein sich abwärts erstreckender Fuß 13 angeformt, an den zwei zueinander im wesentlichen parallele, in Richtung der Basisplatte 8 gerichtete Stege 14 angeformt sind, so daß der Standbeinhalter unten geißfußartig ausgebildet ist, wie dies von Ventileinstellschlüsseln der KFZ-Technik her bekannt ist. Zwischen der Unterseite 15 des Standbeinhalters 9 und den Oberseiten 16 der Stege 14 sind Klemmspalte 17 gebildet. Zwischen den Stegen 14 ist ein Zwischenraum 18, wie insbesondere aus der Schnittdarstellung der Figur 8 ersichtlich ist.

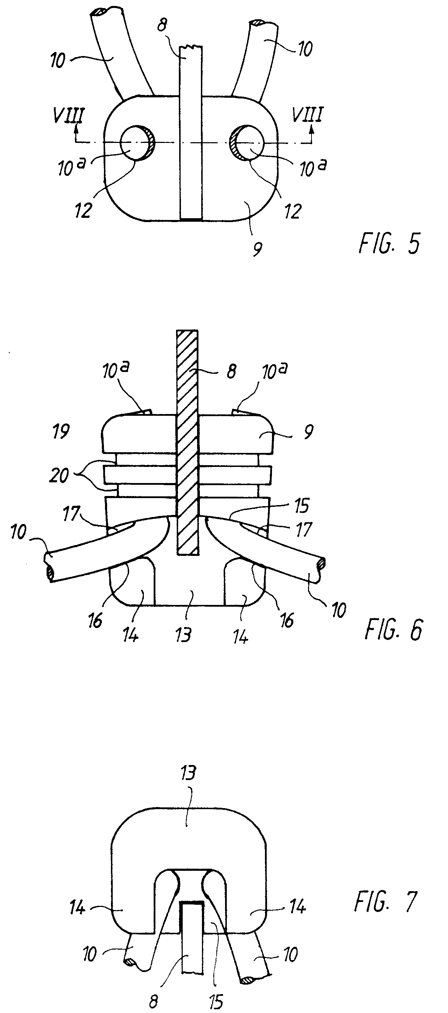

Die Standbeine 10 haben abgewinkelte Enden 10^{a}, die in die zylindrischen Lagerbohrungen 12 eingesetzt sind, so daß die Standbeine 10 um die Achsen der Bohrungen 12 schwenkbar sind. Die Einführung der abgewinkelten Enden 10^{a} in ihre Lagerbohrungen 12 erfolgt durch den Zwischenraum 18 zwischen den Stegen 14. Nachdem die Standbeine 10 auf diese Weise in die Lagerbohrungen 12 des Standbeinhalters eingesetzt sind, wird der Standbeinhalter von unten in eine entsprechende Aussparung 8^{a} (Fig. 4) der Basisplatte 8 eingesetzt, wobei die Platte 8 mit dem in Figur 2 linken Rand dieser Aussparung 8^{a} in den Raum zwischen die Klemmspalte 17 ragt (vergl. Figur 6). Aus Figur 6 ist ersichtlich, daß dann die Standbeine 10 auch beim Einschwenken an die Basisplatte 8 nicht mehr von dem Standbeinhalter 9 getrennt werden können, da sie beim Herausziehen der Enden 10^{a} aus den Bohrungen 12 an der Platte 8 anschlagen, bevor die Enden 10^{a} die Bohrungen 12 vollständig verlassen haben. Mit dem Aufsetzen des Standbeinhalters auf die Platte 8 sind daher auch die Standbeine 10 in dein Standbeinhalter montiert. Aus der Figur 2 ist ersichtlich, daß die Oberseite 16 der Stege 14 eine Vertiefung 16^{a} aufweist, die von dem Standbein 10 eingenommen wird, wenn dieses sich zwecks Aufstellung des Dreiecks in seiner vollständig ausgeschwenkten Lage befindet. In der in Figur 2 gezeigten, vollständig eingeschwenkten Position liegt das Standbein 10 bereits teilweise außerhalb des Spaltes 17 und unterliegt dann nicht mehr dem Klemmeingriff durch den Steg 14. Wird das Standbein 10 jedoch ausgeschwenkt, passiert es den Klemmspalt 17, in dem es geklemmt wird, so daß die Schwenkbewegung gehemmt wird, bis das Standbein in die Vertiefung 16^{a} gelangt ist. Auf diese Weise werden die in Figur 2 gezeigte, vollständig eingeschwenkte Position und die vollständig ausgeschwenkte Position des Standbeins in der Vertiefung 16^{a} gegen Verschwenkung stabilisiert.

Der Standbeinhalter 9 ist ferner mit Umfangsnuten 20 versehen, die sich zum Teil über den gesamten Umfang erstrekken, zum Teil aber nur über kurze Umfangbereiche. Durch diese Nuten 20 wird der Standbeinhalter gegenüber durch die Basisplatte 8 in den Körper 9 eingeleiteten, etwa in Richtung des Pfeils 21 (Figur 3) wirkenden Kräften verformbarer. Die auf das aufgestellte Warndreieck 1-3 wirksamen Winddruckkräfte werden daher teilweise durch die Verformung der Standbeinhalter 9 aufgenommen, so daß die in Pfeilrichtung 21 wirkenden Kräfte zum Teil in Richtung auf den Boden umgelenkt werden. Dadurch wird die Gefahr der Verschiebung oder Kippung des Dreiecks verringert.

Die in den Figuren 9 und 10 dargestellte Ausführungsform des Standbeinhalters 9 unterscheidet sich von der Ausführungsform nach den Figuren 2 bis 8 im wesentlichen dadurch, daß der an die Unterseite 15 des Standbeinhalters 9 angeformte Fuß 13 mittig, d.h. beiderseits der Symmetriemitt elebene angeordnet ist und die beiden Stege 14 an dem Fuß 13 nicht nach innen, d.h. in Richtung der Basisplatte 8, sondern nach beiden Seiten, d.h. von der Mittelebene nach beiden Seiten weg gerichtet sind. Die Oberseiten 16 der Stege 14 haben wiederum eine Mulde 16^{a}, in der das Standbein 10 klemmentspannt ist, so daß diese Lage des vollständig ausgeschwenkten Standbeins gegenüber Verschwenkung stabilisiert ist. Ein dem Raum 18 (Fig. 8) entsprechender Zwischenraum für die Einführung der Standbeine 10 in ihre Lagerbohrungen 12 ist an der Außenseite, d.h. in Figur 9 an der rechten Seite des Standbeinhalters vorgesehen und in den Figuren 9 und 10 nicht erkennbar. Auch bei dieser Ausführungsform greift die Platte 8 in diesen Zwischenraum, wenn der Standbeinhalter 9 in die Basisplatte 8 eingesetzt ist, so daß dann die Standbeinenden 10^{a} nicht mehr von dem Standbeinhalter getrennt werden können.

## Patentansprüche

1. Zusammenlegbares Warndreieck zur Mitführung in Kraftfahrzeugen, mit drei roten rückstrahlenden Leisten (1-3), wobei eine Leiste (3) an einer metallischen Basisplatte (8) angebracht ist oder selbst als Basisplatte dient, einem Standbeinhalter (9) an jedem der beiden Enden der Basisplatte mit je einer Lagerbohrung (12) beiderseits der Basisplatte, und vier Standbeinen (10), die mit ihren abgewinkelten Enden in den Lagerbohrungen beider Standbeinhalter schwenkbar gelagert sind, dadurch gekennzeichnet, daß an der Unterseite (15) eines jeden Standbeinhalters (9) beiderseits der Basisplatte (8) je ein Steg (14) angeformt ist, der mit dem jeweiligen Standbeinhalter (9) einen Klemmspalt (17) bildet, in dem das Standbein (10) stärker geklemmt wird als in seiner vollständig eingeschwenkten und vollständig ausgeschwenkten Position.

2. Warndreieck nach Anspruch 1, dadurch gekennzeichnet, daß die beiden Stege (14) an einem an der Unterseite (15) des Standbeinhalters (9) außen nach unten gezogenen Fuß (13) nach innen ragend angeformt sind.

3. Warndreieck nach Anspruch 1 oder 2, dadurch gekennzeichnet, daß zwischen den beiden Stegen (14) ein Zwischenraum (18) gebildet ist und die in den Lagerbohrungen (12) geführten Standbeine (10,10^{a}) nur bei Entfernung der Platte (8) aus dem Zwischenraum (18) bis zur Freigabe aus den Lagerbohrungen (12) in den Raum (18) hinein verschiebbar sind.

4. Warndreieck nach einem der Ansprüche 1 bis 3, dadurch gekennzeichnet, daß in den Standbeinhalter (9) außen- und innenseitig in der Mittelebene (11) Befestigungsnuten (19) ausgebildet sind, die Basisplatte (8) nahe ihren beiden Enden mit je einer Ausnehmung (8^{a}) versehen und mit ihren Ausnehmungsrändern in die Befestigungsnuten (19) eingesetzt ist.

5. Warndreieck nach Anspruch 4, dadurch gekennzeichnet, daß die in die Befestigungsnuten (19) eingesetzte Basisplatte (8) in den Raum zwischen die Klemmspalte (17) ragt und dadurch die Verschiebungsbewegungen der abgewinkelten Standbeinenden (10^{a}) in ihren Lagerbohrungen (12) begrenzt ist.

6. Warndreieck nach einem der Ansprüche 1 bis 5, dadurch gekennzeichnet, daß an der die vollständig ausgeschwenkte Standbeinlage bestimmenden Stelle des Klemmspalts (17) eine Spalterweiterung (16^{a}) ausgebildet ist.

7. Warndreieck nach einem der Ansprüche 1 bis 6, dadurch gekennzeichnet, daß die Stege (14) ein geringes Federungsvermögen haben.

8. Warndreieck nach einem der Ansprüche 1 bis 7, dadurch gekennzeichnet, daß auf dem Standbeinhalter (9) Umfangsnuten (20) ausgebildet sind.

9. Warndreieck nach einem der Ansprüche 1 bis 8, dadurch gekennzeichnet, daß die Lagerbohrungen (12) für die abgewinkelten Standbeinenden (10^{a}) zur Mittelebene (11) des Standbeinhalters (9) unter einem Winkel β geneigt sind, der in dem Bereich von 3 bis 23°, vorzugsweise von 10 bis 16° liegt.

10. Warndreieck nach Anspruch 1, dadurch gekennzeichnet, daß die beiden Stege (14) an einem an der Unterseite (15) des Standbeinhalters (9) mittig nach unten gezogenen Fuß (13) zu den beiden Seiten ragend angeformt sind.

## Claims

1. Foldable warning triangle destined to be taken along in motor vehicles comprising
three red reflecting webs (1-3) one of which is mounted at a metallic base plate (8) or serves as a base plate itself,
a leg bearing body (9) at each of both ends of the base plate having one bearing bore (12) each on both sides of the base plate, and
four legs (10) having their angle-shaped ends pivoted in the bearing bores of both leg bearing bodies,
characterized in that a flange (14) is provided at the bottom side (15) of each leg bearing body (9) on both sides of the base plate (8) and the flange together with the leg bearing body (9) forms a clamping slit (17) in which the leg (10) is clamped more tightly than in its completely swung-in and swung-out positions.

2. Warning triangle according to claim 1, characterized in that both flanges (14) projecting inwardly are formed at a foot (13) extending downwardly from the bottom side (15) of the leg bearing body (9).

3. Warning triangle according to claim 1 or 2, characterized in that a gap (18) is formed between both flanges (14), and the legs (10,10^{a}) pivoted in the bearing bores (12) can only be displaced into the gap (18) to a position in which they are released from the bearing bores (12) when the plate (8) is removed from the gap (18).

4. Warning triangle according to any of the claims 1 to 3, characterized in that fastening grooves (19) are formed in the leg bearing body (9) on the outside and inside thereof and are arranged in the median plane thereof, and the base plate (8) is provided with a cutout (8^{a}) each at both ends thereof and is inserted into the fastening grooves (19) with its cutout rims.

5. Warning triangle according to claim 4, characterized in that the base plate (8) inserted into the fastening grooves (19) extends into the space between the clamping slits (17) whereby the ranges of displacement of the angle-shaped leg ends (10^{a}) in their bearing bores (12) are limited.

6. Warning triangle according to any of the claims 1 to 5, characterized in that a slit enlargement (16^{a}) is formed at the place of the clamping slit (17) defining the position of the completely swung-out leg.

7. Warning triangle according to any of the claims 1 to 6, characterized in that the flanges (14) have a small resilience.

8. Warning triangle according to any of the claims 1 to 7, characterized in that peripheral grooves (20) are formed on the leg bearing body (9).

9. Warning triangle according to any of the claims 1 to 8, characterized in that the bearing bores (12) for the angle-shaped leg ends (10^{a}) are set at an angle β to the median plane (11) of the leg bearing body (9) which angle is in the range from 3 to 23°, preferably from 10 to 16°.

10. Warning triangle according to claim 1, characterized in that both flanges (14) projecting to both sides are formed at a foot (13) extending downwardly from the middle of the bottom side (15) of the leg bearing body (9).

## Revendications

1. Triangle de signalisation pliable à emporter dans des véhicules automobiles, comprenant trois lattes réfléchissantes (1-3) de couleur rouge, une latte (3) étant appliquée contre une plaque de base métallique (8) ou servant elle-même de plaque de base, un support de jambe de soutien (9) à chacune des deux extrémités de la plaque de base, comprenant respectivement un alésage de palier (12) de part et d'autre de la plaque de base, et quatre jambes de soutien (10) qui sont montées en pivotement avec leurs extrémités coudées dans les alésages de paliers des deux supports de jambes de soutien, caractérisé en ce qu'une nervure (14) est façonnée respectivement sur le côté inférieur (15) de chacun des supports de jambes de soutien (9) de part et d'autre de la plaque de base (8), qui forme une fente de serrage (17) avec le support de jambe de soutien respectif (9), dans laquelle la jambe de soutien (10) est serrée plus fortement que dans sa position complètement rentrée par pivotement et complètement sortie par pivotement.

2. Triangle de signalisation selon la revendication 1, caractérisé en ce que les deux nervures (14) sont façonnées en faisant saillie vers l'intérieur sur un pied (13) s'étendant vers le bas à l'extérieur du côté inférieur (15) du support de jambe de soutien (9).

3. Triangle de signalisation selon la revendication 1 ou 2, caractérisé en ce qu'un espace intermédiaire (18) est formé entre les deux nervures (14) et les deux jambes de soutien (10, 10^{a}) guidées dans les alésages de paliers (12) sont à même de se déplacer pour pénétrer dans l'espace (18) uniquement lorsque la plaque (8) quitte l'espace intermédiaire (18) jusqu'à sa libération hors des alésages de paliers (12).

4. Triangle de signalisation selon l'une quelconque des revendications 1 à 3, caractérisé en ce que des rainures de fixation (19) sont réalisées dans le support de jambe de soutien (9) du côté externe et du côté interne, dans le plan médian (11), la plaque de base (8) étant munie respectivement d'un évidement (8^{a}) à proximité de ses deux extrémités, les bords de l'évidement venant s'insérer dans les rainures de fixation (19).

5. Triangle de signalisation selon la revendication 4, caractérisé en ce que la plaque de base (8) insérée dans les rainures de fixation (19) fait saillie dans l'espace ménagé entre les fentes de serrage (17) et délimite ainsi les mouvements de déplacement des extrémités coudées (10^{a}) des jambes de soutien dans leurs alésages de paliers (12).

6. Triangle de signalisation selon l'une quelconque des revendications 1 à 5, caractérisé en ce qu'un élargissement de fente (16^{a}) est réalisé à l'endroit de la fente de serrage (17) déterminant la position dans laquelle les chambres de soutien ont pivoté complètement vers l'extérieur.

7. Triangle de signalisation selon l'une quelconque des revendications 1 à 6, caractérisé en ce que les nervures (14) possèdent une résilience minime.

8. Triangle de signalisation selon l'une quelconque des revendications 1 à 7, caractérisé en ce que des rainures de réception (20) sont réalisées sur le support de jambe de soutien (9).

9. Triangle de signalisation selon l'une quelconque des revendications 1 à 8, caractérisé en ce que les alésages de paliers (12) destinés aux extrémités coudées (10ₐ) des jambes de soutien sont inclinés par rapport au plan médian (11) du support de jambe de soutien (9) en formant un angle β qui se situe dans le domaine de 3 à 23°, de préférence de 10 à 16°.

10. Triangle de signalisation selon la revendication 1, caractérisé en ce que les deux nervures (14) sont façonnées en faisant saillie par rapport aux deux côtés, sur un pied (13) s'étendant vers le bas en position médiane sur le côté inférieur (15) du support de jambe de soutien (9).
